# EUROPÄISCHE PATENTSCHRIFT

(11) **EP 2 463 750 B1**
(45) Veröffentlichungstag und Bekanntmachung des Hinweises auf die Patenterteilung: **29.04.2020**
(21) Anmeldenummer: 11191573.2
(22) Anmeldetag: 01.12.2011
(51) Int. Cl.: G06F 1/32, D06F 33/00

(54) **Steuervorrichtung für ein Haushaltsgerät, Haushaltsgerät und Verfahren zum Betreiben von zwei Steuereinheiten in einem Haushaltsgerät**
Control device for a domestic appliance, domestic appliance and method for operating two control units in a domestic appliance
Dispositif de commande pour un appareil ménager, appareil ménager et procédé de fonctionnement de deux unités de commande dans un appareil ménager

(30) Priorität: 07.12.2010 DE 102010062545
(43) Veröffentlichungstag der Anmeldung: 13.06.2012
(73) Patentinhaber: BSH Hausgeräte GmbH, 81739 München (DE)
(72) Erfinder: Albayrak, Hasan Gökcer, 13469 Berlin (DE); Knopp, Lothar, 12209 Berlin (DE); Mainka, Josef, 13088 Berlin (DE); Sattler, Guido, 14612 Falkensee (DE)

(56) Entgegenhaltungen:
- US-A1- 2004 098 811
- US-A1- 2006 211 400
- US-A1- 2008 052 543

## Beschreibung

Die Erfindung betrifft eine Steuervorrichtung für ein Haushaltsgerät, welche zumindest eine erste und eine zweite Steuereinheit aufweist, nämlich insbesondere einen ersten und einen zweiten Mikrocontroller. Über einen Kommunikationskanal werden Kommunikationssignale zumindest unidirektional zwischen der ersten und der zweiten Steuereinheit übertragen - nämlich zumindest von der ersten Steuereinheit an die zweite Steuereinheit. Die Erfindung betrifft außerdem ein Haushaltsgerät mit einer derartigen Steuervorrichtung, wie auch ein Verfahren zum Betreiben zumindest einer ersten und einer zweiten Steuereinheit in einem Haushaltsgerät.

Es ist Stand der Technik, eine Vielzahl von Steuereinheiten in einem Haushaltsgerät einzusetzen. Bevorzugt sind hier Mikrocontroller bzw. Mikroprozessoren gemeint, welche zur Bereitstellung unterschiedlichster Funktionalitäten im Haushaltsgerät dienen. Mikrocontroller können beispielsweise zur Ansteuerung von Anzeigereinrichtungen eingesetzt werden, wie auch zur Steuerung von Prozessabläufen des Haushaltsgerätes, zur Ansteuerung von elektrischen Verbrauchern oder aber zur Erfassung und Auswertung von Sensorsignalen. Unterschiedlichen Mikrocontrollern können dabei unterschiedliche Funktionen im Haushaltsgerät zugeteilt werden. Es ist außerdem bekannt, dass mehrere Mikrocontroller miteinander kommunizieren können, nämlich über einen Kommunikationskanal, etwa eine Kommunikationsleitung bzw. einen Kommunikationsbus oder aber drahtlos. Es können beispielsweise Informationen über jeweilige Betriebszustände oder aber über einen gegebenenfalls aufgetretenen Fehler zwischen den Mikrocontrollern ausgetauscht werden.

Die Druckschrift US 2006/211400 A1 beschreibt eine Steuervorrichtung in einem KFZ, mit einem Hauptcontroller und einem Kommunikationscontroller, der eine externe Bluetooth-Verbindung zum Benutzer herstellen kann. Die beiden Controller sind über einen Kommunikationsbus verbunden. Ein weiterer Controller überwacht den Kommunikationsbus und aktiviert den Hauptcontroller, wenn der Kommunikationscontroller versucht über den Bus Verbindung mit dem Hauptcontroller aufzunehmen.

Die US 2004/0098811 A1 zeigt eine Waschmaschine mit einer Mehrzahl von mikrokontrollern, die über Kommunikationskanäle miteinander verbunden sind.

Es ist Aufgabe der Erfindung, eine Lösung aufzuzeigen, wie bei einer Steuervorrichtung der eingangs genannten Gattung einerseits elektrische Energie gespart werden kann und andererseits eine der Steuereinheiten ohne viel Aufwand eine Zurücksetzung bzw. ein Aus- und Einschalten der anderen Steuereinheit veranlassen kann.

Diese Aufgabe wird erfindungsgemäß durch eine Steuervorrichtung mit den Merkmalen gemäß Patentanspruch 1 gelöst, wie auch durch ein Haushaltsgerät mit den Merkmalen gemäß Patentanspruch 8 sowie durch ein Verfahren, welches die Merkmale des Patentanspruchs 9 aufweist. Vorteilhafte Ausführungen der Erfindung sind Gegenstand der abhängigen Patentansprüche und der Beschreibung.

Eine erfindungsgemäße Steuervorrichtung für ein Haushaltsgerät umfasst zumindest eine erste und eine zweite Steuereinheit, nämlich insbesondere einen ersten und einen zweiten Mikrocontroller. Es ist ein Kommunikationskanal bereitgestellt, über welchen Kommunikationssignale zumindest unidirektional zwischen der ersten und der zweiten Steuereinheit übertragen werden können, nämlich zumindest von der ersten Steuereinheit an die zweite Steuereinheit. Die Steuervorrichtung umfasst außerdem eine Aktivierungseinrichtung, welche den Kommunikationskanal daraufhin überprüft, ob die erste Steuereinheit die Kommunikationssignale an die zweite Steuereinheit abgibt. Nach Erkennen der Kommunikationssignale veranlasst die Aktivierungseinrichtung eine Aktivierung der zweiten Steuereinheit.

Also wird der erfindungsgemäße Effekt dadurch erzielt, dass die zweite Steuereinheit erst dann aktiviert wird, wenn die erste Steuereinheit Kommunikationssignale an die zweite Steuereinheit abgibt. Findet hingegen keine Kommunikation zwischen der ersten und der zweiten Steuereinheit statt, so wird die zweite Steuereinheit bevorzugt deaktiviert bzw. ein deaktivierter Zustand der zweiten Steuereinheit aufrechterhalten. Die erfindungsgemäße Steuervorrichtung hat mehrere Vorteile: Einerseits kann somit elektrische Energie gespart werden; die zweite Steuereinheit verbraucht nämlich elektrische Energie nur während einer Kommunikation mit der ersten Steuereinheit. Andererseits kann die erste Steuereinheit gezielt eine Aktivierung bzw. eine Deaktivierung der zweiten Steuereinheit veranlassen Zum Beispiel kann die erste Steuereinheit die zweite Steuereinheit nach Erkennen eines Betriebsfehlers bzw. eines fehlerhaften Betriebszustandes der zweiten Steuereinheit deaktivieren und wieder aktivieren, um eine Zurücksetzung der zweiten Steuereinheit zu erreichen. Eine solche Zurücksetzung der zweiten Steuereinheit kann durch Abbrechen der Abgabe der Kommunikationssignale durch die erste Steuereinheit erfolgen. Dies kann beispielsweise so aussehen, dass bei einer bidirektionalen Kommunikation zwischen den beiden Steuereinheiten die zweite Steuereinheit Informationen über ihren fehlerhaften Betriebszustand an die erste Steuereinheit übermittelt oder aber überhaupt keine (erwartete) Kommunikationssignale an die erste Steuereinheit sendet und daraufhin die erste Steuereinheit die Abgabe der Kommunikationssignale einstellt, um eine Zurücksetzung der zweiten Steuereinheit zu veranlassen. Durch erneute Abgabe der Kommunikationssignale kann die erste Steuereinheit dann wieder eine Inbetriebnahme der zweiten Steuereinheit bewirken. Also kann die erste Steuereinheit ohne viel Aufwand eine Zurücksetzung (Reset) der zweiten Steuereinheit veranlassen, nämlich durch Einstellung und Wiederaufnahme der Kommunikation.

Ganz allgemein gesagt kann also die erste Steuereinheit dazu ausgelegt sein, nach Erkennen eines fehlerhaften Zustandes bzw. eines Betriebsfehlers der zweiten Steuereinheit die Abgabe der Kommunikationssignale an die zweite Steuereinheit abzubrechen, um die zweite Steuereinheit zu deaktivieren. Dann kann die erste Steuereinheit nach Ablauf eines vorbestimmten Zeitintervalls - beispielsweise zwischen 1 ms bis einigen Sekunden - die Kommunikation mit der zweiten Steuereinheit wieder aufnehmen, um die zweite Steuereinheit wieder zu aktivieren. Eine solche Vorgehensweise hat den Vorteil, dass fehlerhafte Betriebszustände der zweiten Steuereinheit mit geringstem Aufwand behoben werden können, nämlich mithilfe der ersten Steuereinheit.

Unter einem Haushaltsgerät wird vorliegend ein Gerät verstanden, dass zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Das kann aber auch ein Haushaltskleingerät sein, wie beispielsweise ein Kaffeevollautomat oder eine Küchenmaschine.

Es erweist sich als besonders vorteilhaft, wenn die erste Steuereinheit eine gegenüber der zweiten Steuereinheit übergeordnete Steuereinheit ist. Dann kann die erste (übergeordnete) Steuereinheit Steuersignale als Kommunikationssignale bzw. Steuerbefehle an die zweite (untergeordnete) Steuereinheit übertragen. Beispielsweise kann die untergeordnete Steuereinheit zur Ansteuerung eines elektrischen Verbrauchers in dem Haushaltsgerät dienen, während die übergeordnete Steuereinheit zur Steuerung von Prozessabläufen bzw. Betriebsprogrammen des Haushaltsgerätes und somit zur Ansteuerung von untergeordneten Steuereinheiten eingesetzt werden kann. Gerade dann ist es besonders vorteilhaft, wenn die übergeordnete Steuereinheit ohne viel Aufwand eine Zurücksetzung der untergeordneten Steuereinheit bewirken kann. Es kann somit ein ordnungsgemäßer Betrieb des Haushaltsgerätes gewährleistet werden.

Die Aktivierung bzw. Deaktivierung der zweiten Steuereinheit mithilfe der Aktivierungseinrichtung kann auf verschiedenste Art und Weisen erfolgen:
Zum Beispiel kann eine Spannungsversorgungseinheit - etwa ein Netzteil, insbesondere ein Schaltnetzteil - bereitgestellt sein, welche eine elektrische Versorgungsspannung für die zweite Steuereinheit bereitstellt. Die Steuervorrichtung kann auch Schaltmittel umfassen, über welche die Spannungsversorgungseinheit mit der zweiten Steuereinheit elektrisch gekoppelt werden kann. Dann kann die Aktivierungseinrichtung nach Erkennen der Kommunikationssignale die Schaltmittel in einen elektrisch leitenden Schaltzustand schalten, in welchem die Spannungsversorgungseinheit mit der zweiten Steuereinheit elektrisch gekoppelt ist und somit die zweite Steuereinheit die elektrische Versorgungsspannung abgreifen kann. Auf diesem Wege kann die zweite Steuereinheit besonders rasch aktiviert werden; die Aktivierungseinrichtung erkennt die Kommunikationssignale am Kommunikationskanal und schaltet daraufhin sofort die Schaltmittel in den elektrisch leitenden Schaltzustand. Die Schaltmittel können beispielsweise einen elektrischen Schalter, etwa einen Transistor, beinhalten, über welchen die Spannungsversorgungseinheit mit der zweiten Steuereinheit elektrisch gekoppelt werden kann. Die Steuervorrichtung kommt also bei dieser Ausführungsform mit lediglich einem einfachen Schalter aus.

Die Kommunikationssignale können beispielsweise Spannungssignale sein; die erste Steuereinheit kann mit der zweiten Steuereinheit mithilfe von Spannungssignalen kommunizieren. Dabei kann beispielsweise eine elektrische Spannung moduliert werden. Die Aktivierungseinrichtung kann diese elektrische Spannung am Kommunikationskanal abgreifen, und diese Spannung kann zur Aktivierung der zweiten Steuereinheit genutzt werden. Beispielsweise kann die Aktivierungseinrichtung ein Hochpassfilter - etwa mit einem Kondensator - beinhalten und/oder einen Gleichrichter und/oder einen Kondensator, welcher aufgrund der Kommunikationssignale aufgeladen wird. Wird dieser Kondensator aufgeladen, so kann die an diesem Kondensator anliegende Spannung zur Aktivierung der zweiten Steuereinheit verwendet werden, nämlich insbesondere zur Ansteuerung der Schaltmittel und/oder zum unmittelbaren Aufwecken der zweiten Steuereinheit und/oder zur Ansteuerung der Spannungsversorgungseinheit.

Eine weitere Möglichkeit zur Aktivierung der zweiten Steuereinheit besteht darin, dass die Aktivierungseinrichtung nach Erkennen der Kommunikationssignale die Spannungsversorgungseinheit zur Erzeugung der Versorgungsspannung ansteuern kann. Dazu kann die Spannungsversorgungseinheit einen Steueranschluss aufweisen, und die Aktivierungseinrichtung kann Steuersignale an den Steueranschluss der Spannungsversorgungseinheit abgeben, um die Erzeugung der Versorgungsspannung durch die Spannungsversorgungseinheit zu bewirken. Ist die Spannungsversorgungseinheit ein Schaltnetzteil, so kann die Aktivierungseinrichtung beispielsweise in einen Regelkreis des Schaltnetzteils eingreifen. Diese Ausführungsform hat den Vorteil, dass keine separaten Schaltmittel eingesetzt werden müssen; die Steuervorrichtung kommt ohne zusätzliche Schaltmittel aus.

Ergänzend oder Alternativ kann die zweite Steuereinheit auch einen Aktivierungseingang aufweisen. Dann kann die zweite Steuereinheit durch Anlegen eines Aufwecksignals am Aktivierungseingang aktiviert werden. Die Aktivierungseinrichtung kann nach Erkennen der Kommunikationssignale das Aufwecksignal am Aktivierungseingang der zweiten Steuereinheit bereitstellen, um die zweite Steuereinheit zu aktivieren. Bei dieser Ausführungsform sind weder zusätzliche Schaltmittel erforderlich, noch muss die Spannungsversorgungseinheit separat angesteuert werden. Die Aktivierungseinrichtung kann lediglich die Kommunikationssignale am Kommunikationskanal abgreifen und selbige Kommunikationssignale in das Aufwecksignal für die zweite Steuereinheit umwandeln. Das Aufwecksignal kann beispielsweise eine Gleichspannung (high signal) sein, aufgrund deren die zweite Steuereinheit über den Aktivierungseingang (auch unter der Bezeichnung "Reset-Anschluss" bekannt) aktiviert wird.

Also wird die zweite Steuereinheit dann aktiviert, wenn die erste Steuereinheit Kommunikationssignale sendet. Wie bereits ausgeführt, kann die Aktivierungseinrichtung eine Deaktivierung der zweiten Steuereinheit veranlassen oder einen deaktivierten Zustand der zweiten Steuereinheit aufrecht erhalten, wenn keine Kommunikationssignale am Kommunikationsbus vorliegen. Bei Nichtvorliegen der Kommunikationssignale von der ersten Steuereinheit wird also die zweite Steuereinheit deaktiviert bzw. der deaktivierte Zustand aufrechterhalten. Auf diesem Wege gelingt es, elektrische Energie zu sparen, da die zweite Steuereinheit nur bei Vorliegen der Kommunikationssignale aktiviert ist.

Der Kommunikationskanal kann auch zur bidirektionalen Kommunikation zwischen der ersten Steuereinheit und der zweiten Steuereinheit ausgebildet sein. Dann können Kommunikationssignale über den Kommunikationskanal sowohl von der ersten Steuereinheit an die zweite Steuereinheit als auch von der zweiten Steuereinheit an die erste Steuereinheit übertragen werden. Es können somit Informationen auch von der zweiten Steuereinheit an die erste Steuereinheit übertragen werden. Beispielsweise kann die zweite Steuereinheit Informationen über ihren aktuellen Betriebszustand an die erste Steuereinheit übertragen. Insbesondere nach Auftreten eines Betriebsfehlers kann die zweite Steuereinheit die erste Steuereinheit über den aufgetretenen Fehler informieren, und die erste Steuereinheit kann die Kommunikation mit der zweiten Steuereinheit abbrechen, um letztere zu deaktivieren. Dies kann auch so aussehen, dass die erste Steuereinheit die zweite Steuereinheit dann durch Einstellen der Kommunikation deaktiviert, wenn die zweite Steuereinheit - zum Beispiel für eine vorgegebene Zeitdauer - keine Kommunikationssignale an die erste Steuereinheit sendet. In diesem Falle kann die erste Steuereinheit nämlich feststellen, dass die zweite Steuereinheit einen Betriebsfehler aufweist.

Die Erfindung betrifft auch ein Haushaltsgerät, welches eine erfindungsgemäße Steuervorrichtung umfasst.

Ein erfindungsgemäßes Verfahren ist zum Betreiben zumindest einer ersten und einer zweiten Steuereinheit, insbesondere eines ersten und eines zweiten Mikrocontrollers, in einem Haushaltsgerät ausgelegt. Über einen Kommunikationskanal werden Kommunikationssignale zumindest von der ersten Steuereinheit an die zweite Steuereinheit übertragen. Eine Aktivierungseinrichtung überprüft den Kommunikationskanal daraufhin, ob die erste Steuereinheit die Kommunikationssignale an die zweite Steuereinheit sendet oder nicht. Nach Erkennen der Kommunikationssignale veranlasst die Aktivierungseinrichtung eine Aktivierung der zweiten Steuereinheit.

Die mit Bezug auf die erfindungsgemäße Steuervorrichtung vorgestellten bevorzugten Ausführungsformen und deren Vorteile gelten entsprechend für das erfindungsgemäße Haushaltsgerät sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Haushaltsgerät mit einer Steuervorrichtung gemäß einer ersten Ausführungsform der Erfindung; und
- Fig. 2: in schematischer Darstellung ein Haushaltsgerät mit einer Steuervorrichtung gemäß einer zweiten Ausführungsform der Erfindung.

In den Figuren werden gleiche und funktionsgleiche Elemente mit den gleichen Bezugszeichen versehen.

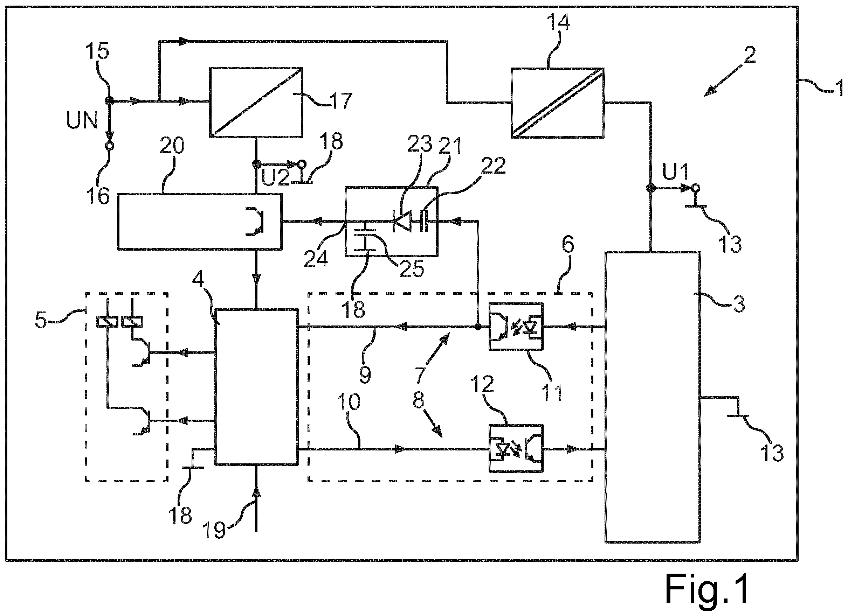

Bezugsnehmend auf Fig. 1 befindet sich in einem Haushaltsgerät 1 eine Steuervorrichtung 2, welche zwei Steuereinheiten aufweist, nämlich eine erste Steuereinheit 3 sowie eine zweite Steuereinheit 4. Das Haushaltsgerät 1 kann beispielsweise eine Waschmaschine sein. Die Steuereinheiten 3, 4 sind Mikrocontroller. Die erste Steuereinheit 3 ist ein gegenüber der zweiten Steuereinheit 4 übergeordneter Mikrocontroller, während die zweite Steuereinheit 4 ein untergeordneter Mikrocontroller ist. Die zweite Steuereinheit 4 dient im Haushaltsgerät 1 zur Ansteuerung einer Gruppe von elektrischen Verbrauchern 5. Die zweite Steuereinheit 4 kann beispielsweise ein Motorsteuergerät sein, nämlich zur Ansteuerung eines elektrischen Antriebsmotors für eine Wäschetrommel. Hingegen dient die erste Steuereinheit 3 zur Steuerung von Prozessabläufen bzw. Programmen des Haushaltsgerätes 1. Die erste Steuereinheit 3 kann dabei Kommunikationssignale mit Steuerbefehlen an die zweite Steuereinheit 4 übertragen. Es können auch weitere untergeordnete Steuereinheiten vorgesehen sein, welche durch die erste Steuereinheit 3 angesteuert werden bzw. an welche Steuerbefehle von der ersten Steuereinheit 3 übertragen werden.

Die Steuereinheiten 3, 4 kommunizieren miteinander über einen Kommunikationskanal 6. Der Kommunikationskanal 6 ist zur bidirektionalen Kommunikation zwischen den Steuereinheiten 3, 4 ausgebildet. Er umfasst einen ersten Kommunikationspfad 7, wie auch einen zweiten Kommunikationspfad 8. Die Kommunikationspfade 7, 8 sind elektrische Leitungen. Über den ersten Kommunikationspfad 7 können Kommunikationssignale 9 von der ersten Steuereinheit 3 an die zweite Steuereinheit 4 übertragen werden, während über den zweiten Kommunikationspfad 8 Kommunikationssignale 10 von der zweiten Steuereinheit 4 an die erste Steuereinheit 3 übertragen werden können. Die Steuereinheiten 3, 4 liegen auf unterschiedlichen elektrischen Potentialen. Zur Aufrechterhaltung dieser unterschiedlichen Potentiale sind in die Kommunikationspfade 7, 8 jeweils ein Optokoppler 11, 12 integriert. Über den Optokoppler 11 können die Kommunikationssignale 9 von der ersten Steuereinheit 3 an die zweite Steuereinheit 4 übertragen werden, während über den Optokoppler 12 die Kommunikationssignale 10 von der zweiten Steuereinheit 4 an die erste Steuereinheit 3 übertragen werden können.

Die erste Steuereinheit 3 wird mit einer Versorgungsspannung U1 versorgt, nämlich gegenüber einem Bezugspotential 13, an welchem auch die erste Steuereinheit 3 liegt. Die Versorgungsspannung U1 ist eine Gleichspannung. Sie wird mithilfe einer Spannungsversorgungseinheit 14 bereitgestellt, die zum Beispiel ein Schaltnetzteil sein kann. Die Spannungsversorgungseinheit 14 greift dabei eine Netzspannung UN ab, welche zwischen Eingangsanschlüssen 15, 16 anliegt. Die Netzspannung UN wird von einem elektrischen Versorgungsnetz bereitgestellt und ist somit eine Wechselspannung. Sie wird auch von einer weiteren Spannungsversorgungseinheit 17 abgegriffen, welche eine weitere Versorgungsspannung U2 bereitstellt, nämlich gegenüber einem weiteren Bezugspotential 18. Auch die Spannungsversorgungseinheit 17 kann ein Schaltnetzteil sein. Das weitere Bezugspotential 18 ist ein vom Bezugspotential 13 unterschiedliches elektrisches Potential; die Bezugspotentiale 18, 13 können aber auch gleich sein. Mit der Versorgungsspannung U2 wird die zweite Steuereinheit 4 versorgt.

Die zweite Steuereinheit 4 empfängt auch Informationssignale 19, die von einem Sensor bzw. einer Gruppe von Sensoren des Haushaltsgeräts 1 erzeugt werden. Bei den Sensoren kann es sich beispielsweise um Drehzahlsensoren zur Messung einer Drehzahl des Antriebsmotors handeln.

Im Ausführungsbeispiel gemäß Fig. 1 sind zwischen der Spannungsversorgungseinheit 17 und der zweiten Steuereinheit 4 Schaltmittel 20 geschaltet. Die Schaltmittel 20 dienen zur Kopplung bzw. zur Entkopplung der zweiten Steuereinheit 4 von der Spannungsversorgungseinheit 17 und somit von der Versorgungsspannung U2. Die Schaltmittel 20 können beispielsweise einen elektrischen Schalter, insbesondere einen Transistor, beinhalten, wie dies in Fig. 1 symbolisch angedeutet ist.

Also wird die zweite Steuereinheit 4 mit der Versorgungsspannung U2 versorgt, welche Gleichspannung ist. Die zweite Steuereinheit 4 ist dann aktiviert, wenn sich die Schaltmittel 20 im elektrisch leitenden Schaltzustand befinden; anderenfalls ist die zweite Steuereinheit 4 deaktiviert bzw. abgeschaltet. Zum Schalten der Schaltmittel 20 zwischen dem elektrisch leitenden Schaltzustand und dem elektrisch sperrenden Schaltzustand ist eine Aktivierungseinrichtung 21 bereitgestellt. Also dient die Aktivierungseinrichtung 21 zum Aktivieren sowie zum Deaktivieren der zweiten Steuereinheit 4. Die Aktivierungseinrichtung 21 greift die Kommunikationssignale 9 am ersten Kommunikationspfad 7 ab und steuert die Schaltmittel 20 in Abhängigkeit von den Kommunikationssignalen 9 an. Und zwar sieht diese Ansteuerung derart aus, dass sich die Schaltmittel 20 bei Vorliegen der Kommunikationssignale 9 im elektrisch leitenden Schaltzustand und bei Nichtvorliegen der Kommunikationssignale 9 im elektrischen sperrenden Schaltzustand befinden. Dazu beinhaltet die Aktivierungseinrichtung 21 ein Hochpassfilter, welches einen in Serie geschalteten Kondensator 22 umfassen kann. In Reihe zum Hochpassfilter ist ein Gleichrichter geschaltet, welcher eine Diode 23 umfassen kann. Die Kathode der Diode 23 ist mit einem Ausgang 24 der Aktivierungseinrichtung 21 verbunden, welcher über einen Kondensator 25 mit dem Bezugspotential 18 gekoppelt ist. Der Ausgang 24 ist mit einem Steueranschluss der Schaltmittel 20 verbunden. Der in Fig. 1 gezeigte Aufbau der Aktivierungseinrichtung 21 ist lediglich beispielhaft.

Die Kommunikationssignale 9, 10 sind Spannungssignale; die Kommunikation zwischen den Steuereinheiten 3, 4 erfolgt mithilfe von modulierten Spannungen. Die Kommunikationssignale 9, 10 weisen also jeweils einen Wechselanteil, welcher durch das Hochpassfilter (Kondensator 22) durchgelassen wird. Die elektrische Spannung wird dann mithilfe der Diode 23 gleichgerichtet, und der zwischen dem Ausgang 24 und dem Bezugspotential 18 geschaltete Kondensator 25 wird aufgeladen. Am Kondensator 25 liegt somit eine elektrische Gleichspannung an, mit welcher die Schaltmittel 20 angesteuert werden. Sind die Kommunikationssignale 9 vorhanden, so liegt auch elektronische Spannung am Kondensator 25 an, so dass die Schaltmittel 20 elektrisch leitend sind. Sind keine Kommunikationssignale 9 vorhanden, so wird auch der Kondensator 25 entladen, und die Schaltmittel 20 sperren - die zweite Steuereinheit 4 wird deaktiviert.

Im Prinzip ist die zweite Steuereinheit 4 also nur bei Vorliegen der Kommunikationssignale 9 aktiviert. Sind die Kommunikationssignale 9 nicht vorhanden, so ist die Steuereinheit 4 deaktiviert. Auf diese Weise wird elektrische Energie durch die zweite Steuereinheit 4 nur bei Vorhandensein der Kommunikationssignale 9 verbraucht. Des Weiteren kann die erste Steuereinheit 3 nach Erkennen eines Betriebsfehlers der zweiten Steuereinheit 4 die Abgabe der Kommunikationssignale 9 für ein vorbestimmtes Zeitintervall einstellen, um die zweite Steuereinheit 4 für das vorbestimmte Zeitintervall abzuschalten. Nach einer erneuten Aufnahme der Kommunikation wird die zweite Steuereinheit 4 dann wieder aktiviert. Durch gezieltes Abschalten der zweiten Steuereinheit 4 können auch die elektrischen Verbraucher 5 zwangsweise abgeschaltet werden, nämlich beispielsweise in einem Fehlerfall. Bezüglich der Erkennung eines Betriebsfehlers der zweiten Steuereinheit 4 sind im Prinzip zwei Ausführungsformen vorgesehen: Zum einen kann die zweite Steuereinheit 4 eine Information über einen Fehler über den Kommunikationspfad 8 an die erste Steuereinheit 3 übermitteln Ergänzend oder alternativ kann die erste Steuereinheit 3 die zweite Steuereinheit 4 dann als fehlerhaft interpretieren, wenn über eine vorbestimmte Zeitdauer die zweite Steuereinheit 4 keine Kommunikationssignale 10 sendet, die von der ersten Steuereinheit 3 erwartet werden.

In einer Ausführungsform kann auch auf die Schaltmittel 20 verzichtet werden. Stattdessen kann der Ausgang 24 der Aktivierungseinrichtung 21 mit einem Steuer- oder Regelanschluss der Spannungsversorgungseinheit 17 verbunden sein, und die Aktivierungseinrichtung 21 kann bei Vorhandensein der Kommunikationssignale 9 die Spannungsversorgungseinheit 17 zur Erzeugung der Versorgungsspannung U2 ansteuern.

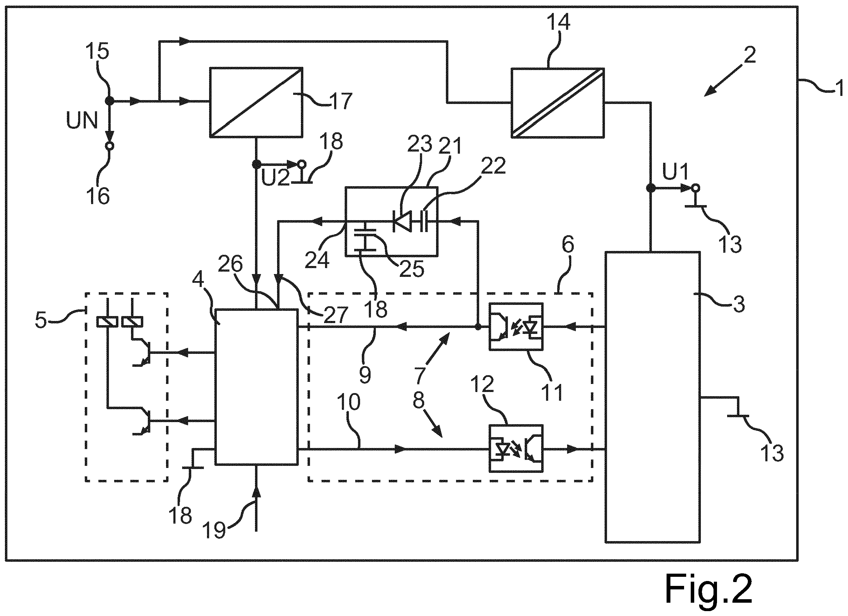

In Fig. 2 ist das Haushaltsgerät 1 mit der Steuervorrichtung 2 gemäß einem weiteren Ausführungsbeispiel der Erfindung dargestellt. Die Steuervorrichtung 2 gemäß Fig. 2 entspricht im Wesentlichen der Steuervorrichtung 2 gemäß Fig. 1. Nachfolgend werden lediglich die Unterschiede dazwischen näher erläutert: Im Ausführungsbeispiel gemäß Fig. 2 ist der Ausgang 24 der Aktivierungseinrichtung 21 mit einem Aktivierungseingang 26 (Reset-Eingang) der zweiten Steuereinheit 4 direkt verbunden. Über den Aktivierungseingang 26 kann die zweite Steuereinheit 4 aktiviert bzw. deaktiviert werden. Und zwar ist die zweite Steuereinheit 4 dann aktiviert, wenn am Aktivierungseingang 26 ein Aufwecksignal 27 anliegt, welches die am Kondensator 25 anliegende Gleichspannung ist (High-Signal). Liegt hingegen am Kondensator 25 keine Gleichspannung an (Low-Signal), so ist die zweite Steuereinheit 4 deaktiviert. Mit anderen Worten ist die zweite Steuereinheit 4 nur bei Vorliegen der Kommunikationssignale 9 aktiviert; sie ist bei Nichtvorliegen der Kommunikationssignale 9 deaktiviert.

### Bezugszeichenliste

- 1: Haushaltsgerät
- 2: Steuervorrichtung
- 3, 4: Steuereinheit
- 5: Verbraucher
- 6: Kommunikationskanal
- 7,8: Kommunikationspfad
- 9, 10: Kommunikationssignale
- 11, 12: Optokoppler
- 13: Bezugspotential
- 14: Spannungsversorgungseinheit
- 15, 16: Eingangsanschlüsse
- 17: Spannungsversorgungseinheit
- 18: Bezugspotential
- 19: Informationssignale
- 20: Schaltmittel
- 21: Aktivierungseinrichtung
- 22: Kondensator
- 23: Diode
- 24: Ausgang
- 25: Kondensator
- 26: Aktivierungseingang
- 27: Aufwecksignal
- U1, U2: Versorgungsspannung
- UN: Netzspannung

## Patentansprüche

1. Steuervorrichtung (2) für ein Haushaltsgerät (1), mit:
- zumindest einer ersten und einer zweiten Steuereinheit (3, 4), insbesondere einem ersten und einem zweiten Mikrocontroller (3, 4),
- einem Kommunikationskanal (6), über welchen Kommunikationssignale (9) zumindest von der ersten Steuereinheit (3) an die zweite Steuereinheit (4) übertragbar sind, und
- einer Aktivierungseinrichtung (21), die dazu ausgebildet ist, den Kommunikationskanal (6) darauf hin zu überprüfen, ob die erste Steuereinheit (3) die Kommunikationssignale (9) an die zweite Steuereinheit (4) sendet, und nach Erkennen der Kommunikationssignale (9) eine Aktivierung der zweiten Steuereinheit (4) zu veranlassen,
- wobei die Aktivierungseinrichtung (21) dazu ausgebildet ist, bei Nichtvorliegen der Kommunikationssignale (9) eine Deaktivierung der zweiten Steuereinheit (4) zu veranlassen oder einen deaktivierten Zustand der zweiten Steuereinheit (4) aufrechtzuerhalten, **dadurch gekennzeichnet dass**
die erste Steuereinheit dazu ausgebildet ist, nach Erkennen eines Betriebsfehlers bzw. eines fehlerhaften Betriebszustandes der zweiten Steuereinheit durch Abbrechen der Abgabe der Kommunikationssignale die zweite Steuereinheit zu deaktivieren und durch Wiederaufnahme der Abgabe der Kommunikationssignale wieder zu aktivieren, um eine Zurücksetzung der zweiten Steuereinheit zu erreichen.

2. Steuervorrichtung (2) nach Anspruch 1, wobei die erste Steuereinheit (3) eine gegenüber der zweiten Steuereinheit (4) übergeordnete Steuereinheit (4) ist, welche dazu ausgebildet ist, Steuersignale als Kommunikationssignale (9) an die zweite Steuereinheit (4) abzugeben.

3. Steuervorrichtung (2) nach Anspruch 1 oder 2, welche eine Spannungsversorgungseinheit (17) zum Bereitstellen einer elektrischen Versorgungsspannung (U2) für die zweite Steuereinheit (4) sowie weiterhin Schaltmittel (20) umfasst, über welche die Spannungsversorgungseinheit (17) mit der zweiten Steuereinheit (4) elektrisch koppelbar ist, wobei die Aktivierungseinrichtung (21) dazu ausgebildet ist, nach Erkennen der Kommunikationssignale (9) die Schaltmittel (20) in einen elektrisch leitenden Schaltzustand zu schalten, um die zweite Steuereinheit (4) zu aktivieren.

4. Steuervorrichtung (2) nach einem der vorhergehenden Ansprüche, welche eine Spannungsversorgungseinheit (17) zum Bereitstellen einer elektrischen Versorgungsspannung (U2) für die zweite Steuereinheit (4) umfasst, wobei die Aktivierungseinrichtung (21) dazu ausgebildet ist, nach Erkennen der Kommunikationssignale (9) die Spannungsversorgungseinheit (17) zur Erzeugung der Versorgungsspannung (U2) anzusteuern, um die zweite Steuereinheit (4) zu aktivieren.

5. Steuervorrichtung (2) nach einem der vorhergehenden Ansprüche, wobei die zweite Steuereinheit (4) einen Aktivierungseingang (26) aufweist und durch Anlegen eines Aufwecksignals (27) am Aktivierungseingang (26) aktivierbar ist, und wobei die Aktivierungseinrichtung (21) dazu ausgebildet ist, nach Erkennen der Kommunikationssignale (9) das Aufwecksignal (27) am Aktivierungseingang (26) der zweiten Steuereinheit (4) bereitzustellen, um die zweite Steuereinheit (4) zu aktivieren.

6. Steuervorrichtung (2) nach einem der vorhergehenden Ansprüche, wobei der Kommunikationskanal (6) zur bidirektionalen Kommunikation zwischen der ersten und der zweiten Steuereinheit (3, 4) ausgebildet ist.

7. Steuervorrichtung (2) nach Anspruch 6, wobei die erste Steuereinheit (3) dazu ausgelegt ist, die Abgabe der Kommunikationssignale (9) an die zweite Steuereinheit (4) dann einzustellen, wenn die zweite Steuereinheit (4) keine Kommunikationssignale (10) an die erste Steuereinheit (3) sendet.

8. Haushaltsgerät (1) mit einer Steuervorrichtung (2) nach einem der vorhergehenden Ansprüche.

9. Verfahren zum Betreiben zumindest einer ersten und einer zweiten Steuereinheit (3, 4), insbesondere eines ersten und eines zweiten Mikrocontrollers (3, 4), in einem Haushaltsgerät (1), wobei
- über einen Kommunikationskanal (6) Kommunikationssignale (9) zumindest von der ersten Steuereinheit (3) an die zweite Steuereinheit (4) übertragen werden,
- eine Aktivierungseinrichtung (21) den Kommunikationskanal (6) darauf hin überprüft, ob die erste Steuereinheit (3) die Kommunikationssignale (9) an die zweite Steuereinheit (4) sendet, und nach Erkennen der Unterbrechung der Kommunikationssignale (9) eine Deaktivierung der zweiten Steuereinheit (4) veranlasst,
- **dadurch gekennzeichnet dass** die erste Steuereinheit, nach Erkennen eines Betriebsfehlers bzw. eines fehlerhaften Betriebszustandes der zweiten Steuereinheit, die Abgabe der Kommunikationssignale unterbricht, und nach Ablauf eines vorbestimmten Zeitintervalls die Ab gabe der Kommunikationssignale wiederaufnimmt
- die Aktivierungseinrichtung (21) den Kommunikationskanal (6) darauf hin überprüft, ob die erste Steuereinheit (3) die Kommunikationssignale (9) an die zweite Steuereinheit (4) sendet, und nach Erkennen der Wiederaufnahme der Kommunikationssignale (9) eine erneute Aktivierung der zweiten Steuereinheit (4) veranlasst, und somit eine Zurücksetzung der zweiten Steuereinheit bewirkt.

## Claims

1. Control device (2) for a household appliance (1), with:
- at least a first and a second control unit (3, 4), in particular a first and a second microcontroller (3, 4),
- a communication channel (6), by way of which communication signals (9) can be transmitted at least from the first control unit (3) to the second control unit (4), and
- an activation device (21), which is embodied to check the communication channel (6) with respect to whether the first control unit (3) sends the communication signals (9) to the second control unit (4), and after identifying the communication signals (9) to trigger an activation of the second control unit (4),
- wherein the activation device (21) is embodied to trigger a deactivation of the second control unit (4) in the absence of the communication signals (9) or to maintain a deactivated state of the second control unit (4), **characterised in that**
- after identifying an operating error or a faulty operating state of the second control unit due to interruption of the transfer of the communication signals, the first control unit is embodied to deactivate the second control unit and by resuming the transfer of the communication signals to reactivate in order to achieve a reset of the second control unit.

2. Control device (2) according to claim 1, wherein the first control unit (3) is a control unit (4) which is superior with respect to the second control unit (4) and which is embodied to output control signals as communication signals (9) to the second control unit (4).

3. Control device (2) according to claim 1 or 2, which comprises a power supply unit (17) for providing an electric power supply (U2) for the second control unit (4) and furthermore switching means (20), by way of which the power supply unit (17) can be electrically coupled to the second control unit (4), wherein the activation device (21) is embodied, after identifying the communications signals (9), to switch the switching means (20) into an electrically conducting switching state, in order to activate the second control unit (4).

4. Control device (2) according to one of the preceding claims, which comprises a power supply unit (17) for providing an electric power supply (U2) for the second control unit (4), wherein after identifying the communication signals (9) the activation device (21) is embodied to actuate the power supply unit (17) in order to generate the power supply (U2) in order to activate the second control unit (4).

5. Control device (2) according to one of the preceding claims, wherein the second control unit (4) has an activation input (26), and can be activated by applying a wake-up signal (27) to the activation input (26), and wherein the activation device (21) is embodied, after identifying the communication signals (9), to provide the wake-up signal (27) at the activation input (26) of the second control unit (4), in order to activate the second control unit (4).

6. Control device (2) according to one of the preceding claims, wherein the communication channel (6) is embodied for bidirectional communication between the first and the second control unit (3, 4).

7. Control device (2) according to claim 6, wherein the first control unit (3) is designed to adjust the transfer of the communication signals (9) to the second control unit (4) if the second control unit (4) sends no communication signals (10) to the first control unit (3).

8. Household appliance (1) with a control device (2) according to one of the preceding claims.

9. Method for operating at least a first and a second control unit (3, 4), in particular a first and a second microcontroller (3, 4), in a household appliance (1), wherein
- communication signals (9) are transmitted at least from the first control unit (3) to the second control unit (4) by way of a communication channel (6),
- an activation device (21) checks the communication channel (6) with respect to whether the first control unit (3) sends the communication signals (9) to the second control unit (4) and after identifying the interruption in the communication signals (9) triggers a deactivation of the second control unit (4),
- **characterised in that** after identifying an operating error or a faulty operating state of the second control unit the first control unit interrupts the transfer of the communication signals and after a predetermined time interval has elapsed resumes the transfer of the communication signals,
- the activation device (21) changes the communication channel (8) with respect to whether the first control unit (3) sends the communication signals (9) to the second control unit (4), and after identifying the resumption of the communication signals (9) triggers a renewed activation of the second control unit (4) and thus causes the second control unit to reset.

## Revendications

1. Dispositif de commande (2) pour un appareil électroménager (1) comprenant:
- au moins une première et une deuxième unité de commande (3, 4), en particulier un premier et un deuxième microcontrôleur (3, 4),
- un canal de communication (6), par le biais duquel des signaux de communication (9) peuvent être transmis au moins de la première unité de commande (3) à la deuxième unité de commande (4), et
- un dispositif d'activation (21) réalisé pour vérifier le canal de communication (6) afin de se rendre compte si la première unité de commande (3) envoie les signaux de communication (9) à la deuxième unité de commande (4), et après reconnaissance des signaux de communication (9), donner lieu à l'activation de la deuxième unité de commande (4),
- dans lequel le dispositif d'activation (21) est réalisé pour, en cas de non présence des signaux de communication (9), donner lieu à une désactivation de la deuxième unité de commande (4) ou maintenir l'état désactivé de la deuxième unité de commande (4), **caractérisé en ce que**
la première unité de commande est réalisée pour, après reconnaissance d'une panne de fonctionnement ou, selon le cas d'un état de fonctionnement défectueux de la deuxième unité de commande, désactiver la deuxième unité de commande par interruption de l'émission des signaux de communication, et la réactiver par reprise de l'émission des signaux de communication pour effectuer une réinitialisation de la deuxième unité de commande.

2. Dispositif de commande (2) selon la revendication 1, dans lequel la première unité de commande (3) est une unité de commande (4) primant sur la deuxième unité de commande (4), laquelle est réalisée pour émettre à la deuxième unité de commande (4) des signaux de commande sous forme de signaux de communication (9).

3. Dispositif de commande (2) selon la revendication 1 ou 2, lequel comprend une unité d'alimentation en tension (17) pour procurer une tension d'alimentation électrique (U2) pour la deuxième unité de commande (4) ainsi qu'en outre des moyens de commutation (20), par le biais desquels l'unité d'alimentation en tension (17) peut être connectée électriquement à la deuxième unité de commande (4), dans lequel le dispositif d'activation (21) est réalisé pour commuter les moyens de commutation (20) dans un état de commutation conducteur de l'électricité, après reconnaissance des signaux de communication (9), pour activer la deuxième unité de commande (4).

4. Dispositif de commande (2) selon l'une des revendications précédentes, lequel comprend une unité d'alimentation en tension (17) pour procurer une tension d'alimentation électrique (U2) pour la deuxième unité de commande (4), dans lequel le dispositif d'activation (21) est réalisé pour, après reconnaissance des signaux de communication (9), amorcer l'unité d'alimentation en tension (17) en vue de la production de la tension d'alimentation (U2, pour activer la deuxième unité de commande (4).

5. Dispositif de commande (2) selon l'une des revendications précédentes, dans lequel la deuxième unité de commande (4) comprend une entrée d'activation (26) et peut être activée par application d'un signal de réveil (27) sur l'entrée d'activation (26), et dans lequel le dispositif d'activation (21) est réalisé pour, après reconnaissance des signaux de communication (9) procurer le signal de réveil (27) sur l'entrée d'activation (26) de la deuxième unité de commande (4), pour activer la deuxième unité de commande (4).

6. Dispositif de commande (2) selon l'une des revendications précédentes, dans lequel le canal de communication (6) est réalisé pour une communication bidirectionnelle entre la première et la deuxième unité de commande (3, 4).

7. Dispositif de commande (2) selon la revendication 6, dans lequel la première unité de commande (3) est configurée pour suspendre l'émission des signaux de communication (9) à la deuxième unité de commande (4) lorsque la deuxième unité de commande (4) n'envoie pas de signaux de communication (10) à la première unité de commande (3).

8. Appareil électroménager (1) avec un dispositif de commande (2) selon l'une des revendications précédentes.

9. Procédé de fonctionnement d'au moins une première et une deuxième unité de commande (3, 4), en particulier d'un premier et d'un deuxième microcontrôleur (3, 4) dans un appareil électroménager (1), dans lequel
- des signaux de communication (9) sont transmis par le biais d'un canal de communication (6), au moins de la première unité de commande (3) à la deuxième unité de commande (4),
- un dispositif d'activation (21) vérifie le canal de communication (6) afin de se rendre compte si la première unité de commande (3) envoie les signaux de communication (9) à la deuxième unité de commande (4), et après reconnaissance de l'interruption des signaux de communication (9) donne lieu à une désactivation de la deuxième unité de commande (4), **caractérisé en ce que** la première unité de commande interrompt, après reconnaissance d'une panne de fonctionnement ou, selon le cas d'un état de fonctionnement défectueux de la deuxième unité de commande, l'émission des signaux de communication, et après écoulement d'un intervalle de temps prédéterminé, reprend l'émission des signaux de communication,
le dispositif d'activation (21) vérifie le canal de communication (6) afin de se rendre compte si la première unité de commande (3) envoie les signaux de communication (9) à la deuxième unité de commande (4), et après reconnaissance de la reprise des signaux de communication (9) donne lieu à une nouvelle activation de la deuxième unité de commande (4), et ainsi opère une réinitialisation de la deuxième unité de commande.
